# EUROPEAN PATENT APPLICATION

(11) **EP 3 012 060 A1**
(43) Date of publication of application: **27.04.2016**
(21) Application number: 15182894.4
(22) Date of filing: 28.08.2015
(51) Int. Cl.: B23K 26/14

(54) **POWDER CLADDING NOZZLE**

(30) Priority: 08.10.2014 JP 2014207490
(71) Applicant: Toyota Jidosha Kabushiki Kaisha, Toyota-shi, Aichi 471-8571 (JP)
(72) Inventor: IWATANI, Shingo, Toyota-shi, Aichi 471-8571 (JP); SATO, Akio, Toyota-shi, Aichi 471-8571 (JP); ISHIKAWA, Yoshinori, Toyota-shi, Aichi 471-8571 (JP)
(74) Representative: TBK

(57) **Abstract**

A powder cladding nozzle 7 is provided that can, even when the area of a portion to be machined of a workpiece is large, maintain the quality of a cladding layer that is formed on the portion to be machined of the workpiece and thus significantly increase the productivity of workpieces. The passage width of a discharge passage X that is formed between an inner nozzle member 10 and an outer nozzle member 20 becomes wider toward a discharge outlet 18.

## Description

### CLAIM OF PRIORITY

The present application claims priority from Japanese patent application JP 2014-207490 filed on October 8, 2014, the content of which is hereby incorporated by reference into this application.

### BACKGROUND

### Technical Field

The present invention relates to a powder cladding nozzle, and in particular, to a powder cladding nozzle used in a laser cladding process for forming a cladding layer on a workpiece.

### Background Art

Conventionally, there has been known laser processing for, in order to improve the durability of a valve seat of an engine cylinder head and also increase the design flexibility thereof, forming a cladding layer by irradiating the valve seat with a laser beam while supplying a powder-form cladding material thereto and rotating the valve seat and the laser beam relative to each other. Such laser processing is a technique of executing laser beam irradiation while supplying a wear-resistant powder-form cladding material, such as copper alloy, to a region to become a valve seat of a cylinder head that has been subjected to mechanical machining, such as a valve opening forming process that is necessary for a combustion chamber of an engine, and thus forming a ring-shaped cladding layer to finally become a valve seat, that is, a cladding bead portion. Such a technique is typically referred to as a laser cladding process.

In the aforementioned laser cladding process, a coaxial nozzle (i.e., powder cladding nozzle) with a double-pipe structure for passing a laser beam therethrough and discharging metal powder from a region around the laser beam is typically adapted. As such a conventional powder cladding nozzle, a metal powder cladding nozzle shown in FIG. 5 is known (Patent Document 1).

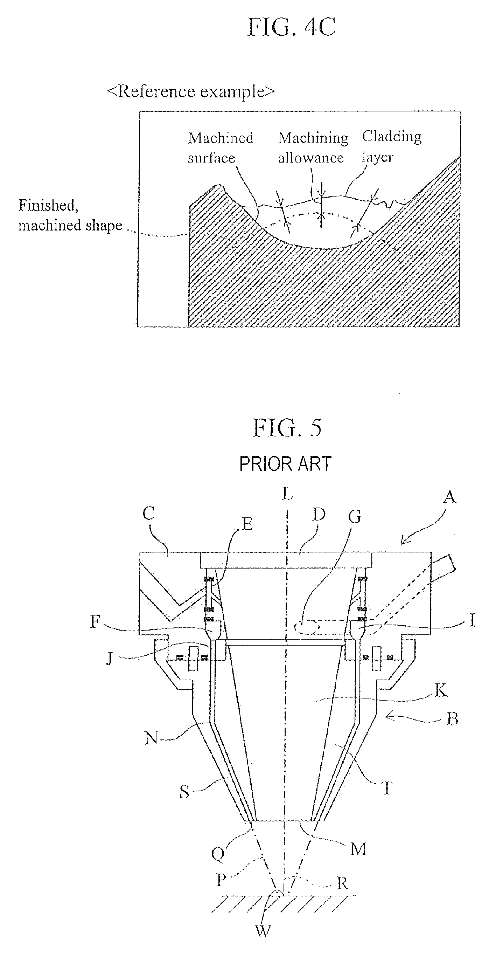

The conventional metal powder cladding nozzle shown in FIG. 5 includes a cylindrical body portion A and a nozzle portion B coaxially coupled to the body portion A. The body portion A includes an outer side member C and an inner side member D that is fitted in the center space of the outer side member C. A ring-shaped gas holding space E, in which inert gas is held, and a metal powder holding space F, in which metal powder is held along with carrier gas, are formed between the outer side member C and the inner side member D. Plural supply passages G open into the metal powder holding space F. The metal powder holding space F is divided into plural metal powder holding regions, which correspond to the plural supply passages G, by dividing portions I. From the periphery of a bottom portion defining the metal powder holding space F, plural guiding holes J, which guide the metal powder to the nozzle portion B, extend in the direction parallel to the axis L, along the circumference of the bottom portion. The guiding holes J are formed so as to open at a bottom surface of the outer side member C. The nozzle portion B includes an outer side nozzle member S coupled to the body portion A, and an inner side nozzle member T fitted in the outer side nozzle member S. Between the outer side nozzle member S and the inner side nozzle member T are provided plural discharge passages N that are communicated with the guiding holes J formed in the body portion A such that the discharge passages N open at a discharge outlet Q of the nozzle portion B. In addition, a laser passage K, which is communicated with the center space of the inner side member D of the body portion A and through which a laser beam R passes, is formed inside the inner side nozzle member T. The laser passage K opens at the end of the inner side nozzle member T, and this opening portion is an irradiation outlet M.

The aforementioned metal powder cladding nozzle is coupled to a laser beam generating device of a laser processing head, and further, the metal powder supply passages G of the body portion A are connected to a metal powder supply source (also referred to as a "feeder") through a metal powder supply pipe. The laser beam R, which is emitted from the laser beam generating device connected to the upper portion of the body portion A of the metal powder cladding nozzle, passes through the laser passage K and then irradiates a portion W to be machined of a workpiece from the irradiation outlet M. Meanwhile, metal powder P, which is supplied along with the carrier gas from the feeder to the metal powder supply passages G through the metal powder supply pipe, is equally supplied to the metal powder holding regions that are obtained by dividing the metal powder holding space F with the dividing portions I. The thus supplied metal powder P passes through the guiding holes J and the discharge passages N, and is discharged from the discharge outlet Q to the portion W to be machined and a peripheral area thereof. The discharged metal powder P is dissolved by the laser beam R and forms a cladding layer on the portion W to be machined.

In such a conventional metal powder cladding nozzle, the metal powder holding space F formed in the body portion A is divided into plural regions, which correspond to the plural supply passages G, by the dividing portions I. Thus, the metal powder P can be equally discharged from a range corresponding to the respective metal powder holding regions of the circumferential discharge outlet Q.

### RELATED ART DOCUMENTS

Patent Documents

Patent Document 1: JP 2005-219060 A

### SUMMARY

By the way, in the conventional metal powder cladding nozzle such as the one described above, the inner circumferential plane of the outer side nozzle member and the outer circumferential plane of the inner side nozzle member, which form the discharge passages for metal powder, are arranged in parallel with each other, and the passage widths of the discharge passages are constant along the direction of the axis. Typically, metal powder that has passed through discharge passages and is discharged from a discharge outlet is concentrated in a region around the center of a portion to be machined of a workpiece.

Therefore, if the area of a portion to be machined of a workpiece is relatively small, it is possible to form a desired cladding layer on the portion to be machined, whereas if the area of a portion to be machined of a workpiece is large, it would be impossible to supply a desired amount of metal powder to the entire portion to be machined, so that a problem would arise that the quality of a cladding layer formed on the portion to be machined of the workpiece would degrade.

The present invention has been made in view of the foregoing problems. It is an object of the present invention to provide a powder cladding nozzle that can, even when the area of a portion to be machined of a workpiece is large, maintain the quality of a cladding layer that is formed on the portion to be machined of the workpiece and thus significantly increase the productivity of workpieces.

In order to achieve the above object, a powder cladding nozzle in accordance with the present invention includes an inner nozzle member with a laser passage for passing a laser beam therethrough; and an outer nozzle member fitted around the inner nozzle member. A discharge passage through which powder passes and a discharge outlet from which the powder that has passed through the discharge passage is discharged are formed between the inner nozzle member and the outer nozzle member. The passage width of the discharge passage becomes wider toward the discharge outlet.

The "passage width of the discharge passage" herein means the distance or dimension in the radial direction between the outer circumferential plane of the inner nozzle member and the inner circumferential plane of the outer nozzle member in a cross-section that is perpendicular to the axis of the nozzle.

According to the powder cladding nozzle of the aforementioned embodiment, the passage width of the discharge passage that is formed between the inner nozzle member and the outer nozzle member becomes wider toward the discharge outlet, whereby powder passes through the discharge passage while expanding (while being dispersed) in the radial direction, and is then discharged from the discharge outlet. Therefore, even when the area of a portion to be machined of a workpiece is large, it is possible to supply powder by dispersing it across a wide range of the portion to be machined, and thus form a cladding layer with a desired thickness on the entire portion to be machined. Thus, the quality of the cladding layer formed on the portion to be machined of the workpiece can be maintained, and the productivity of workpieces can thus be significantly increased.

According to a preferred embodiment of the aforementioned powder cladding nozzle, the outer circumferential plane of the inner nozzle member and the inner circumferential plane of the outer nozzle member that form the discharge passage exhibit a circular truncated cone shape with a diameter that becomes smaller toward the discharge outlet, and the tilt angle of the outer circumferential plane of the inner nozzle member with respect to the center axis is greater than the tilt angle of the inner circumferential plane of the outer nozzle member with respect to the center axis, so that the passage width of the discharge passage becomes wider toward the discharge outlet.

According to the powder cladding nozzle of the aforementioned embodiment, it is possible, with a simple configuration, to continuously increase the passage width of the discharge passage toward the discharge outlet, and thus increase the quality of a cladding layer that is formed on a portion to be machined of a workpiece.

As can be understood from the foregoing description, according to the powder cladding nozzle of the present invention, it is possible, with a simple configuration in which the passage width of a discharge passage that is formed between an inner nozzle member and an outer nozzle member becomes wider toward a discharge outlet, to maintain the quality of a cladding layer that is formed on a portion to be machined of a workpiece and thus significantly increase the productivity of workpieces even when the area of the portion to be machined of the workpiece is large.

### BRIEF DESCRIPTION OF THE DRAWINGS

FIG. 1 is a perspective view schematically showing the main configuration of a laser cladding processing apparatus to which the powder cladding nozzle of the present invention is applied.
FIG. 2 is a longitudinal sectional view showing the main configuration of an embodiment of the powder cladding nozzle of the present invention.
FIGS. 3 are diagrams showing the experimental results of measuring powder distributions in regions around discharge outlets of test pieces of Example, Comparative Examples 1 and 2, and Reference Example; specifically, FIG. 3A shows the experimental result of Example, FIG. 3B shows the experimental result of Comparative Example 1, FIG. 3C shows the experimental result of Comparative Example 2, and FIG. 3D shows the experimental result of Reference Example.
FIGS. 4 are views showing the results of measuring the cross-sections of cladding layers formed using test pieces of Example, Comparative Example 1, and Reference Example; specifically, FIG. 4A shows the measurement result of Example, FIG. 4B shows the measurement result of Comparative Example 1, and FIG. 4C shows the measurement result of Reference Example.
FIG. 5 is a longitudinal sectional view showing a conventional powder cladding nozzle.

### DETAILED DESCRIPTION OF THE EMBODIMENT(S)

Hereinafter, an embodiment of a powder cladding nozzle of the present invention will be described with reference to the drawings.

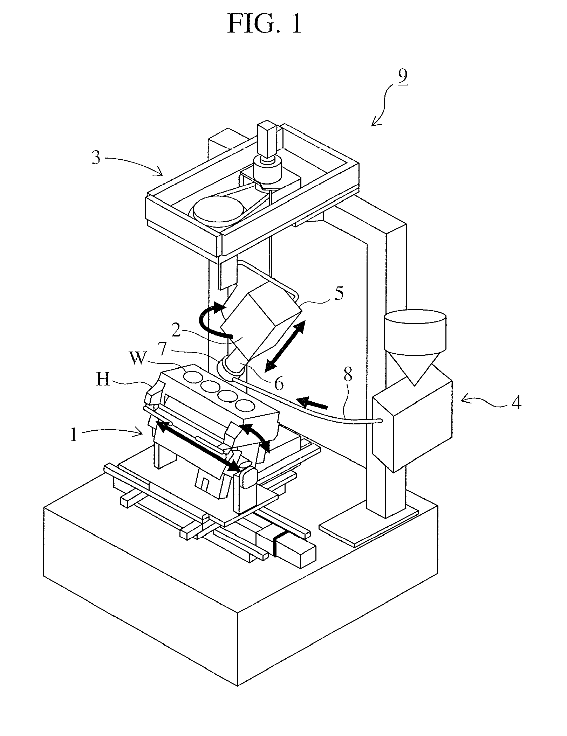

FIG. 1 is a perspective view schematically showing the main configuration of a laser cladding processing apparatus to which the powder cladding nozzle of the present invention is applied.

A laser cladding processing apparatus 9 shown in FIG. 1 is an apparatus for performing a laser cladding process on a valve seat portion (i.e., portion to be machined) W of a cylinder head (i.e., workpiece) H, for example, and includes a cylinder head holding device 1 (i.e., workpiece holding device) that holds the cylinder head H while tilting it, a laser processing head 2 that discharges metal powder (i.e., powder, for example, a material containing copper as a main component) while irradiating the portion to be machined with a laser beam, a rotating device 3 that rotates the laser processing head 2 about the vertical axis while holding and tilting it in the vertical direction, and a powder supply device (i.e., feeder) 4 that supplies metal powder to the laser processing head 2.

The cylinder head holding device 1 tilts the cylinder head H so that the center axis of the valve seat portion W is oriented in the vertical direction, and two-dimensionally moves the cylinder head H in the horizontal direction so that the center axis of the valve seat portion W coincides with the rotation axis of the laser processing head 2.

The laser processing head 2 includes a laser generating unit 5 that generates a laser beam and an optical unit 6 that incorporates a condenser lens that condenses a laser beam and the like. A powder cladding nozzle (also referred to as a coaxial nozzle) 7 with a double-pipe structure, which passes a laser beam therethrough and discharges metal powder from a region around the laser beam, is connected to the tip of the optical unit 6, and the powder cladding nozzle 7 is connected to a feeder 4 via a supply pipe 8.

In the laser cladding processing apparatus 9, metal powder in an amount corresponding to the thickness of a cladding layer to be formed on the portion to be machined is supplied to the powder cladding nozzle 7 from the feeder 4 together with carrier gas (for example, inert gas such as nitrogen gas), and a laser beam with an output level corresponding to the metal powder is generated by the laser generating unit 5, and then, the metal powder is discharged to the portion W to be machined while the portion W to be machined is irradiated with the laser beam via the powder cladding nozzle 7, whereby a desired cladding layer can be formed on the valve seat portion W of the cylinder head H. It should be noted that the amount of metal powder that is supplied to the powder cladding nozzle 7 from the feeder 4, the flow rate of the carrier gas used for pressure-feeding the metal powder to the powder cladding nozzle 7 from the feeder 4, the output level of the laser beam, the processing speed, and the like can be freely adjusted by an appropriate adjusting means.

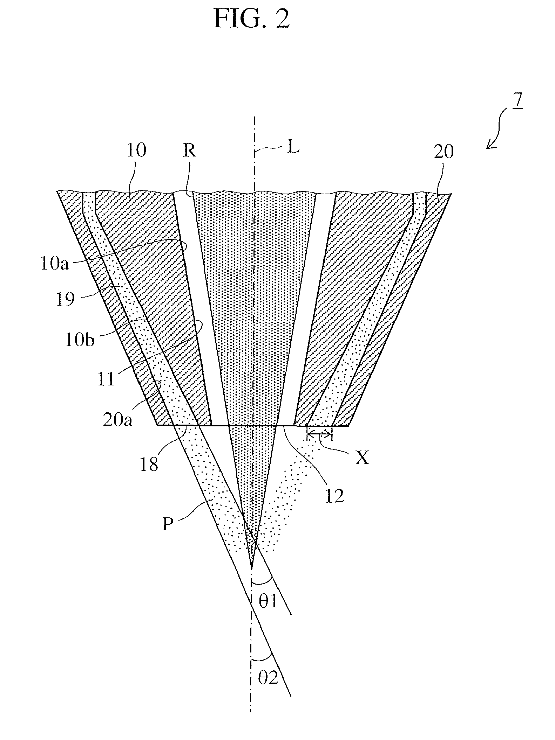

FIG. 2 is a longitudinal sectional view showing the main configuration of the powder cladding nozzle shown in FIG. 1 (an embodiment of the powder cladding nozzle of the present invention), in particular, a longitudinal sectional view showing the discharge outlet side (i.e., tip side) of the powder cladding nozzle. The other configurations are almost the same as those of the conventional metal powder cladding nozzle described on the basis of FIG. 5. Thus, the detailed description thereof will be omitted.

As shown in FIG. 2, the powder cladding nozzle 7 mainly includes an inner nozzle member 10 in a substantially tubular shape, which has a laser passage 11 for passing a laser beam R therethrough, and an outer nozzle member 20 fitted around the inner nozzle member 10. The inner nozzle member 10 and the outer nozzle member 20 are arranged coaxially, and a discharge passage 19 that is substantially annular in shape and through which metal powder P passes is defined between the inner nozzle member 10 and the outer nozzle member 20. In addition, a discharge outlet 18 that is annular in shape and through which the metal powder P that has passed through the discharge passage 19 is discharged to the outside is formed between the tip of the inner nozzle member 10 and the tip of the outer nozzle member 20.

The diameters of an inner circumferential plane 10a and an outer circumferential plane 10b of the inner nozzle member 10 and an inner circumferential plane 20a of the outer nozzle member 20 become smaller toward the discharge outlet 18 side (i.e., tip side) along the central axis L direction. That is, the outer circumferential plane 10b of the inner nozzle member 10 and the inner circumferential plane 20a of the outer nozzle member 20 exhibit a circular truncated cone shape with a diameter that becomes smaller toward the discharge outlet 18. The tilt angle θ1 of the outer circumferential plane 10b of the inner nozzle member 10 with respect to the center axis L is greater than the tilt angle θ2 of the inner circumferential plane 20a of the outer nozzle member 20 with respect to the center axis L. The passage width X of the discharge passage 19 that is formed between the outer circumferential plane 10b of the inner nozzle member 10 and the inner circumferential plane 20a of the outer nozzle member 20 continuously becomes wider toward the discharge outlet 18.

Therefore, metal powder (powder) P that is introduced to the discharge passage 19 from the feeder 4 via the supply pipe 8 and the like together with carrier gas passes through the discharge passage 19 toward the tip side (i.e., discharge outlet 18) while expanding in the radial direction (i.e., direction that is orthogonal to the center axis L), and is then discharged from the annular discharge outlet 18. The metal powder P discharged from the discharge outlet 18 is melted by a laser beam R that has been emitted from the laser generating unit 5, has passed through the laser passage 11 of the inner nozzle member 10, and is output from the irradiation outlet 12, whereby the melted metal powder is welded to the portion W to be machined of the workpiece H. Then, the welded metal powder is cooled and solidified, so that a cladding layer with a desired thickness and external shape is formed on the portion W to be machined of the workpiece H. It should be noted that the laser passage 11 formed by the inner circumferential plane 10a of the inner nozzle member 10 also serves as a passage for inert gas, so that the inert gas is sprayed to the portion W to be machined of the workpiece H from the irradiation outlet 12 when the aforementioned laser cladding process is performed.

According to the powder cladding nozzle 7 with such a configuration, the passage width X of the discharge passage 19 that is formed between the inner nozzle member 10 and the outer nozzle member 20 continuously becomes wider toward the discharge outlet 18, whereby powder passes through the discharge passage 19 while expanding (while being dispersed) in the radial direction, and is then discharged from the discharge outlet 18. Therefore, even when the area of the portion W to be machined of the workpiece H is large, it is possible to supply powder by dispersing it across a wide range of the portion W to be machined, and thus form a cladding layer with a desired thickness on the entire portion W to be machined. Thus, the quality of the cladding layer formed on the portion W to be machined of the workpiece H can be maintained, and the productivity of workpieces H can thus be significantly increased.

Although the above embodiment has mainly described an example in which the powder is metal powder used for a laser cladding process, any powder can be used as long as it can form a desired cladding layer on a portion to be machined of a workpiece.

It is needless to mention that the shapes of the outer circumferential plane 10b of the inner nozzle member 10 and the inner circumferential plane 20a of the outer nozzle member 20, the tilt angle θ1 of the outer circumferential plane 10b of the inner nozzle member 10 with respect to the center axis L, and the tilt angle θ2 of the inner circumferential plane 20a of the outer nozzle member 20 with respect to the center axis L are not limited to the examples shown in the drawings, and can be changed as appropriate in accordance with, for example, the amount of metal powder supplied to the powder cladding nozzle 7 from the feeder 4, the flow rate of carrier gas used to pressure-feed the metal powder to the powder cladding nozzle 7 from the feeder 4, and the like as long as the passage width X of the discharge passage 19 continuously expands toward the discharge outlet 18.

### [Experiments of measuring powder distributions in regions around discharge outlets of test pieces and shapes of cladding layers, and results thereof]

The inventors prepared four types of test pieces having discharge passages with different shapes (Example, Comparative Examples 1 and 2, and Reference Example), and measured powder distributions in regions around discharge outlets and also measured the shapes of cladding layers formed through a laser cladding process when the test pieces were each operated by being connected to the laser processing head of the laser cladding processing apparatus (see FIG. 1), and then evaluated the radial uniformity of powder discharged from the discharge outlets.

### <Specifications of test pieces of Example, Comparative Examples 1 and 2, and Reference Example>

Table 1 below shows the specifications of the test pieces of Example, Comparative Examples 1 and 2, and Reference Example used in the present experiment. As shown in Table 1, referring to the test piece of Example, the tilt angle θ1 of the outer circumferential plane of the inner nozzle member with respect to the center axis is 40 degrees, the tilt angle θ2 of the inner circumferential plane of the outer nozzle member with respect to the center axis is 38.5 degrees, and the passage width X of the discharge passage at the tip (i.e., discharge outlet) of the nozzle is about 7 mm. Referring to the test piece of Comparative Example 1, the tilt angle θ1 of the outer circumferential plane of the inner nozzle member with respect to the center axis is 40 degrees, the tilt angle θ2 of the inner circumferential plane of the outer nozzle member with respect to the center axis is 40 degrees, and the passage width X of the discharge passage at the tip (i.e., discharge outlet) of the nozzle is about 5 mm. Referring to the test piece of Comparative Example 2, the tilt angle θ1 of the outer circumferential plane of the inner nozzle member with respect to the center axis is 40 degrees, the tilt angle θ2 of the inner circumferential plane of the outer nozzle member with respect to the center axis is 40 degrees, and the passage width X of the discharge passage at the tip (i.e., discharge outlet) of the nozzle is about 7 mm. Referring to the test piece of Reference Example, the tilt angle θ1 of the outer circumferential plane of the inner nozzle member with respect to the center axis is 40 degrees, the tilt angle θ2 of the inner circumferential plane of the outer nozzle member with respect to the center axis is 38 degrees, and the passage width X of the discharge passage at the tip (i.e., discharge outlet) of the nozzle is about 7 mm.

That is, a nozzle that is similar to the powder cladding nozzle in the aforementioned embodiment was used for each of the test pieces of Example and Reference Example, while a nozzle that is similar to the conventional powder cladding nozzle shown in FIG. 5 was used for each of the test pieces of Comparative Examples 1 and 2.

**[Table 1]**

| | θ1 (degrees) | θ2 (degrees) | θ1 - θ2 (degrees) | X (mm) (Tip of Nozzle) |
|---|---|---|---|---|
| Example | 40 | 38.5 | 1.5 | about 7 |
| Comparative Example 1 | 40 | 40 | 0 | about 5 |
| Comparative Example 2 | 40 | 40 | 0 | about 7 |
| Reference Example | 40 | 38 | 2.0 | about 7 |

### <Method for measuring powder distributions in regions around discharge outlets of test pieces>

A method for measuring powder distributions in regions around discharge outlets of the test pieces will be briefly described. A laser processing head, to which each test piece was attached, of a laser cladding processing apparatus was disposed in the vertical direction, and the laser cladding processing apparatus was operated, so that powder (i.e., material containing copper as a main component) was sprayed from the discharge outlet together with carrier gas. Then, the amounts of powder that has passed through holes with diameters of φ 3 mm, φ 5 mm, and φ 7 mm were measured at a position away from the discharge outlet by 15 mm in the vertical direction (i.e., in the direction of the center axis L). It should be noted that the amount of powder supplied at that time was 0.9 g/s, and the flow rate of the carrier gas was 8.0 l/min.

### <Results of measuring powder distributions in regions around discharge outlets of test pieces>

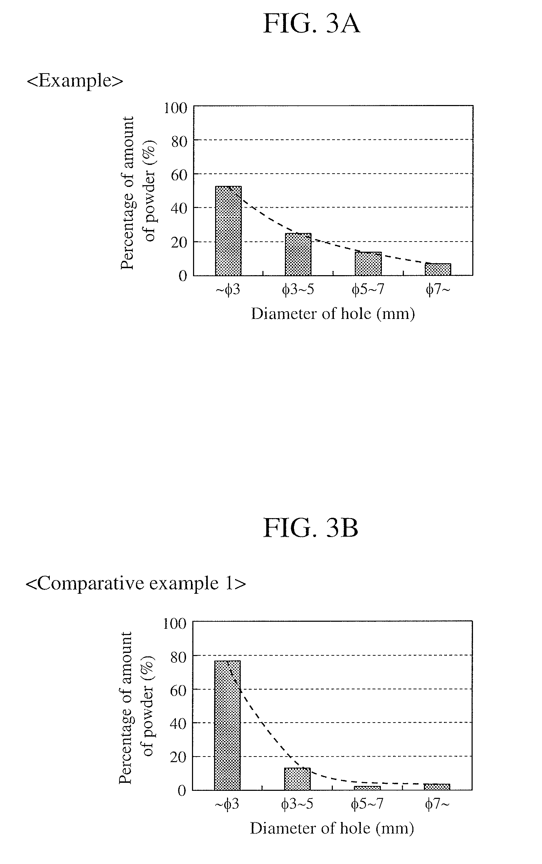

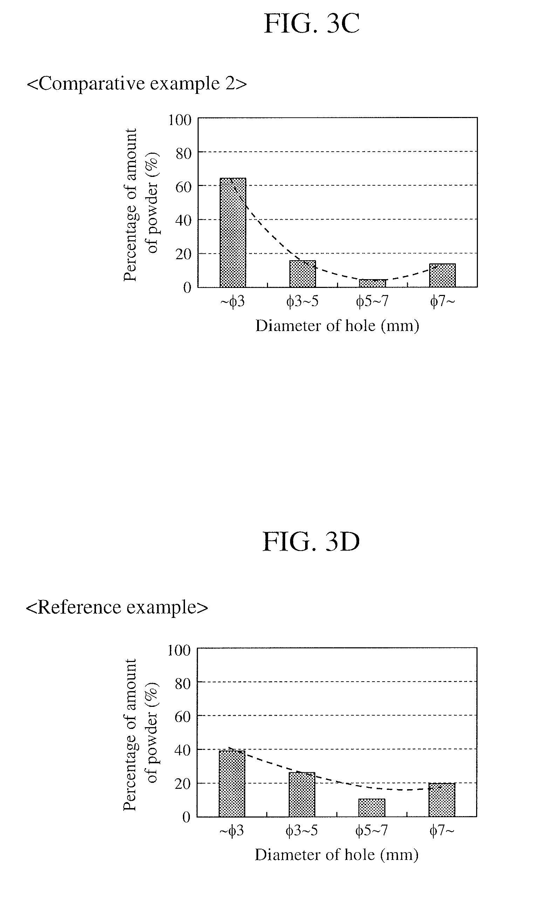

FIGS. 3 are diagrams showing the experimental results of measuring powder distributions in regions around discharge outlets of test pieces of Example, Comparative Examples 1 and 2, and Reference Example. FIGS. 3A to 3D are diagrams showing the experimental results of Example, Comparative Examples 1, Comparative Example 2, and Reference Example, respectively. In FIGS. 3, the amounts of powder, which has passed through a hole with a diameter of up to φ 3 mm, a hole with a diameter of φ 3 to 5 mm, a hole with a diameter of φ 5 to 7 mm, and a hole with a diameter of greater than or equal to φ 7 mm, are shown as the percentages with respect to the amounts of powder supplied to the powder cladding nozzles.

As shown in FIGS. 3, referring to the test pieces of Comparative Examples 1 and 2, the percentages of powder that passes through a hole with a diameter of φ 3 mm are about 78 % and about 65 %, respectively, and the percentages of powder that passes through a hole with a diameter of φ 3 to 5 mm are about 14 % and about 16 %, respectively. Thus, it was confirmed that powder discharged from the discharge outlet is concentrated in a region around the center (i.e., around the center axis). In addition, referring to the test piece of Comparative Example 2, the percentage of powder that passes through a hole with a diameter of greater than or equal to φ 7 mm is about 15 %. Thus, it was confirmed that the amount of powder that is discharged to the outer side of the preset beam size is increased, resulting in a lower yield.

Meanwhile, referring to the test piece of Example, the percentage of powder that passes through a hole with a diameter of φ 3 mm is about 53 %, the percentage of powder that passes through a hole with a diameter of φ 3 to 5 mm is about 26 %, the percentage of powder that passes through a hole with a diameter of φ 5 to 7 mm is about 14 %, and the percentage of powder that passes through a hole with a diameter of greater than or equal to φ 7 mm is about 7 %. Thus, it was confirmed that powder discharged from the discharge outlet is dispersed in the radial direction, resulting in increased uniformity of powder in the radial direction, and that the amount of powder that is discharged to the outer side of the preset beam size can be suppressed.

From the experimental result of the test piece of Reference Example, it was found that the angular difference (θ1 - θ2) between the tilt angle θ1 of the outer circumferential plane of the inner nozzle member with respect to the center axis and the tilt angle θ2 of the inner circumferential plane of the outer nozzle member with respect to the center axis should be appropriately designed in accordance with the amount of powder supplied, the flow rate of carrier gas, and the like because if the angular difference (θ1 - θ2) is increased too much, there is a possibility that the amount of powder that is discharged to the outer side of the preset beam size may increase as with the test piece of Comparative Example 2.

### <Method for measuring the shapes of cladding layers formed using test pieces>

Next, a method for measuring the shapes of cladding layers formed using the test pieces will be briefly described. A laser cladding processing apparatus, to which each of the test pieces of Example, Comparative Example, and Reference Example was attached, was operated, and powder (i.e., material containing copper as a main component) was sprayed from the discharge outlet together with carrier gas while a laser beam was output from the irradiation outlet, so that a cladding layer was formed on a portion to be machined, which is in a groove shape, of a workpiece. Then, the cross-section of the cladding layer was measured on a part of the portion to be machined.

### <Results of measuring the shapes of cladding layers formed using test pieces>

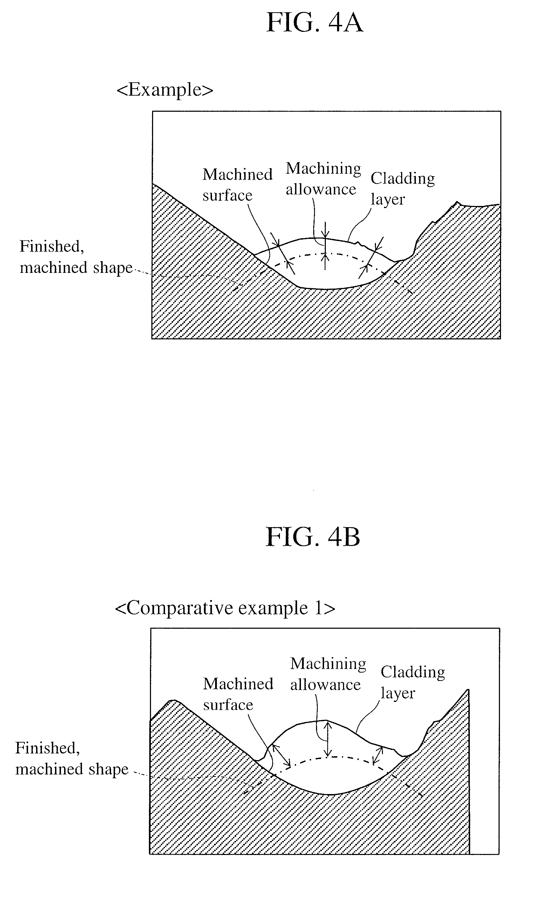

FIGS. 4 are views showing the results of measuring the cross-sections of cladding layers formed using the test pieces of Example, Comparative Example 1, and Reference Example. FIGS. 4A to 4C show the measurement results of Example, Comparative Example 1, and Reference Example, respectively.

As shown in FIGS. 4, referring to the test piece of Comparative Example 1, it was confirmed that the thickness of a cladding layer is large in a region around the center (i.e., around the center axis) of the portion to be machined, and the machining allowance of the cladding layer is not uniform across the entire portion to be machined. Meanwhile, referring to the test piece of Example, it was confirmed that the thickness of a cladding layer is thinner in a region around the center (i.e., around the center axis) of the portion to be machined in comparison with the test piece of Comparative Example 1, and the machining allowance of the cladding layer is uniform (stable) across the entire portion to be machined. It should be noted that from the experimental result of the test piece of Reference Example, it was confirmed that if the angular difference (θ1 - θ2) between the tilt angle θ1 of the outer circumferential plane of the inner nozzle member with respect to the center axis and the tilt angle θ2 of the inner circumferential plane of the outer nozzle member with respect to the center axis is increased too much, there is a possibility that the width of a cladding layer may become too large.

The experimental results demonstrate that it is possible, with a simple configuration in which the passage width of a discharge passage that is formed between an inner nozzle member and an outer nozzle member is increased toward a discharge outlet, to maintain the quality of a cladding layer that is formed on a portion to be machined of a workpiece and stabilize the machining allowance for the cladding layer, and thus significantly increase the productivity of workpieces even when the area of the portion to be machined of the workpiece is large.

Although the embodiments of the present invention have been described in detail above, a specific configuration is not limited thereto, and any design changes and the like that are within the spirit and scope of the present invention are all included in the present invention.

A powder cladding nozzle is provided that can, even when the area of a portion to be machined of a workpiece is large, maintain the quality of a cladding layer that is formed on the portion to be machined of the workpiece and thus significantly increase the productivity of workpieces. The passage width of a discharge passage that is formed between an inner nozzle member and an outer nozzle member becomes wider toward a discharge outlet.

### DESCRIPTION OF SYMBOLS

- 1: Cylinder head holding device
- 2: Laser processing head
- 3: Rotating device
- 4: Powder supply device (i.e., feeder)
- 5: Laser generating unit
- 6: Optical unit
- 7: Powder cladding nozzle
- 8: Supply pipe
- 9: Laser cladding processing apparatus
- 10: Inner nozzle member
- 10a: Inner circumferential plane of inner nozzle member
- 10b: Outer circumferential plane of inner nozzle member
- 11: Laser passage
- 12: Irradiation outlet
- 18: Discharge outlet
- 19: Discharge passage
- 20: Outer nozzle member
- 20a: Inner circumferential plane of outer nozzle member
- L: Center axis
- X: Passage width of discharge passage
- R: Laser beam
- P: Metal powder
- W: Valve seat portion (Portion to be machined)
- H: Cylinder head (Workpiece)

## Claims

1. A powder cladding nozzle (7) comprising:
an inner nozzle member (10) with a laser passage (11) for passing a laser beam (R) therethrough; and
an outer nozzle member (20) fitted around the inner nozzle member (10), wherein
a discharge passage (19) through which powder (P) passes and a discharge outlet (18) from which the powder (P) that has passed through the discharge passage (19) is discharged are formed between the inner nozzle member (10) and the outer nozzle member (20), and
a passage width of the discharge passage (X) becomes wider toward the discharge outlet (18).

2. The powder cladding nozzle (7) according to claim 1, wherein
an outer circumferential plane of the inner nozzle member (10b) and an inner circumferential plane of the outer nozzle member (20a) that form the discharge passage (19) exhibit a circular truncated cone shape with a diameter that becomes smaller toward the discharge outlet (18), and
a tilt angle of the outer circumferential plane of the inner nozzle member (10b) with respect to a center axis (L) is greater than a tilt angle of the inner circumferential plane of the outer nozzle member (20a) with respect to the center axis (L), so that the passage width of the discharge passage (X) becomes wider toward the discharge outlet (18).

3. Laser cladding processing apparatus (9) for performing a laser cladding process on a portion to be machined (W) of a workpiece (H) comprising:
a workpiece holding device (1) that holds the workpiece (H) while tilting it,
a laser processing head (2) that discharges powder (P) while irradiating the portion to be machined (W) with a laser beam (R),
a rotating device (3) that rotates the laser processing head (2) about the vertical axis while holding and tilting it in the vertical direction, and
a powder supply device (4) that supplies metal powder to the laser processing head (2), wherein
said laser processing head (2) includes a laser generating unit (5) that generates the laser beam (R) and an optical unit (6) that incorporates a condenser lens that condenses the laser beam (R); **characterized by**
a powder cladding nozzle (7) according to claims 1 or 2 being connected to the tip of the optical unit (6), and
said powder cladding nozzle (7) being connected to the powder supply device (4) via a supply pipe (8).

4. Method for forming a cladding layer on a portion to be machined (W) of a workpiece (H) using an apparatus according to claim 3, wherein
powder (P) is introduced to the discharge passage (19) from the powder supply device (4) via the supply pipe (8) together with carrier gas;
the powder (P) passes through the discharge passage (19) toward the tip side,
the powder (P) is discharged from the annular discharge outlet (18),
the powder (P) is melted by a laser beam (R) that has been emitted from the laser generating unit (5), has passed through the laser passage (11) of the inner nozzle member (10), and is output from the irradiation outlet (12), whereby the melted powder (P) is welded to the portion to be machined (W) of the workpiece (H),
the welded powder (P) is cooled and solidified, so that a cladding layer with a desired thickness and external shape is formed on the portion to be machined (W) of the workpiece (H); **characterized by**
the powder (P) expanding in the radial direction being orthogonal to the center axis (L) while passing through the discharge passage (19) toward the tip side of the powder cladding nozzle (7).
